# EUROPEAN PATENT SPECIFICATION

(11) **EP 3 943 990 B1**
(45) Date of publication and mention of the grant of the patent: **04.03.2026**
(21) Application number: 21186799.9
(22) Date of filing: 20.07.2021
(51) Int. Cl.: G02B 6/02, G02B 6/38

(54) **SINGLE-MODE OPTICAL FIBER WITH THIN COATING FOR HIGH DENSITY CABLES AND INTERCONNECTS**
EINZELMODUSGLASFASER MIT DÜNNER BESCHICHTUNG FÜR HOCHDICHTE KABEL UND VERBINDUNGEN
FIBRE OPTIQUE MONOMODALE AVEC REVÊTEMENT MINCE POUR CÂBLES ET INTERCONNEXIONS À HAUTE DENSITÉ

(30) Priority: 21.07.2020 US 202063054453 P
(43) Date of publication of application: 26.01.2022
(73) Proprietor: Corning Research & Development Corporation, Corning, New York 14831 (US)
(72) Inventor: CLARK, Jeffrey Scott, Lindley, 14858 (US); DRAKE, Matthew Ryan, Painted Post, 14870 (US); HART, Shandon Dee, Elmira, 14905 (US); LI, Ming-Jun, Horseheads, 14845 (US); MCCLURE, Randy LaRue, Corning, 14830 (US); NIU, Weijun, Painted Post, 14870 (US); WU, Qi, Painted Post, 14870 (US); ZHANG, Yali, Painted Post, 14870 (US)
(74) Representative: Reddie & Grose LLP

(56) References cited:
- US-A- 5 644 670
- US-A1- 2011 085 772
- US-B1- 6 269 210
- MURASE T ET AL: "Single-mode non-strippable primary coated fiber", OPTICAL FIBER COMMUNICATION CONFERENCE. (OFC). TECHNICAL DIGEST POSTCONFERENCE EDITION. ANAHEIM, CA, MARCH 17 - 22, 2001; [TRENDS IN OPTICS AND PHOTONICS SERIES. TOPS. VOLUME 54], WASHINGTON, WA : OSA, US, 17 March 2001 (2001-03-17), pages ThC2, XP031969052, ISBN: 978-1-55752-655-7

## Description

### PRIORITY APPLICATION

This application claims the benefit of priority of U.S. Provisional Application No. 63/054,453, filed on July 21, 2020.

### TECHNICAL FIELD

This disclosure pertains to single-mode optical fibers. More particularly, this disclosure pertains to small diameter single-mode optical fibers. Most particularly, this disclosure pertains to small diameter single-mode optical fibers having a reduced coating thickness without a significant decrease in puncture resistance. More particularly, this disclosure pertains to coated optical fibers for use in optical fiber connectors where the coated optical fibers have consistent coating diameters and reduced concentricity values.

### BACKGROUND ART

Optical fibers are commonly used for voice, video, and data transmissions in many different settings each of which can pose installation challenges. In a telecommunications system that uses optical fibers, there are typically many locations where fiber optic cables carrying the optical fibers connect to equipment or other fiber optic cables. To conveniently provide these connections, optical fiber connectors ("connectors") are often provided on the ends of fiber optic cables.

The process of terminating an optical fiber with a connector generally includes stripping the optical fiber to remove a protective coating, injecting adhesive into a bore of a ferrule, inserting the stripped ("bare") optical fiber into and through the ferrule bore, curing the adhesive to secure the optical fiber in the ferrule, cleaving the optical fiber close to an end face of the ferrule, and polishing the optical fiber and ferrule end face.

US5644670A discloses that broad bandwidth optical fibers which have a broad bandwidth suitable for data-communication, are free from fiber cracking or chipping if a crimp-type connector is attached with sufficient pulling resistant force to hold the fiber firmly, minimize the connection loss through a small crimping optical loss and a accurate axial alignment, facilitate connection with existing GI quartz optical fibers, which have a fiber diameter of 125 mu m, and offer excellent compatibility with such existing GI quartz optical fibers. Broad bandwidth optical fibers discussed are graded index broad bandwidth optical fibers fabricated from a core made of quartz-based glass with a graded refractive index profile, a quartz glass cladding provided over said core, and polymer covering layer provided over said cladding, with said polymer covering layer made of a UV-cured hard polymer with a Shore hardness of D 55 or more and a thickness of 5 mu m or more. Jacketed optical fiber units are then produced by providing a primary coating over an optical fiber and a secondary coating over a primary-coated optical fiber or fibers. Finally optical fiber cords are produced by providing a polymer sheath around a jacketed optical fiber unit.

US2011085772A1 discloses an optical fiber comprising: (i) a multi-mode silica based glass core, said core having a 80-300 µm diameter and an index of refraction n1; (ii) a cladding surrounding the core, said cladding having a thickness ≦20 µm and index of refraction index of refraction n21, the cladding comprising (a) fluorine doped silica with relative index of refraction delta <0, or (b) a polymer with relative index of refraction delta <0; (iii) a protective coating, the protective coating having a Young's modulus greater than 700 MPa, a thickness ≦15 µm, and an index of refraction index of refraction n3>n2; and (iv) a permanent buffer.

Murase T et al: "Single-mode non-strippable primary coated fiber" discloses a single-mode non-strippable primary coated (SM-NSP) fiber covered with a thin polymer. This fiber has good mechanical and environment reliability, and can be fusion-spliced to SM fibers with low splice loss.

Various non-contact stripping processes have been developed to remove the protective coating with minimum damage to the bare optical fiber. However, when the bare optical fiber is inserted in a ferrule, any mechanical contact can still result in flaws that cause immediate failure (e.g., fiber break) or failures in the long term. In addition, to achieve low insertion loss in connectors, the inner diameter of the ferrule is closely matched to the outer diameter of the bare optical fiber. Because the bare optical fiber is also slightly eccentric, sometimes it is desirable to rotate the bare optical fiber inside the ferrule so that the concentricity error of a fiber core relative to the center of the ferrule is minimized. These processes further increase the mechanical contact of the glass surface with the ferrule, thereby increasing the risk of flaws/damage to the bare optical fiber. Improvements in the foregoing are desired.

### SUMMARY

The invention is defined in the independent claims to which reference should now be made. Advantageous features are set forth in the dependent claims.

The present disclosure relates to a thin coated optical fiber that enables connector assembly without stripping the optical fiber.

In a first aspect of the invention, an optical fiber connector assembly according to claim 1 is provided.

Optionally, the concentricity of the polymer coating relative to the fiber core is less than about 0.15 µm.

Optionally, the polymer coating further comprises a secondary hot melt coating, wherein the secondary hot melt coating has a thickness ranging between 0.1 µm and 10 µm.

Further, the assembly may have an insertion loss ranging between 0.1 dB and 1.5 dB at a reference wavelength of 1310 nm or 1550 nm.

Optionally, the polymer coating is selected from the group consisting of: UV-cured acrylates, organic UV-curing acrylate resins filled with SiO₂ or ZrO₂ nanoparticles, non-acrylate polymers such as polyimides, and silane additives.

Further, the polymer coating may have an elastic modulus greater than 0.3 GPa.

Optionally, the polymer coating has a pencil hardness value greater than 3H on Polymethylmethacrylate (PMMA) film.

In a second aspect of the invention, a method of preparing an optical fiber connector assembly according to claim 8 is provided.

Optionally, the polymer coating is selected from the group consisting of: UV-cured acrylates, organic UV-curing acrylate resins filled with SiO₂ or ZrO₂ nanoparticles, non-acrylate polymers such as polyimides, and silane additives.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

The accompanying drawings are included to provide a further understanding and are incorporated in and constitute a part of this specification. The drawings are illustrative of selected aspects of the present disclosure, and together with the description serve to explain principles and operation of methods, products, and compositions embraced by the present disclosure.

### BRIEF DESCRIPTION OF THE DRAWINGS

FIG. 1 is a cross-sectional view of an optical fiber with coating(s) applied thereto.
FIG. 2 is a graph depicting variations in the outer diameters of optical fiber of FIG. 1.
FIG. 3 is a perspective view of an optical fiber connector assembly where the optical fiber of FIG. 1 is inserted into a ferrule.
FIG. 4 is a cross-sectional view of an optical fiber connector assembly where the optical fiber of FIG. 1 is inserted into a ferrule with a bonding agent shown.
FIG. 5 is a front view of an optical fiber end face of the optical fiber connector assembly of FIG. 4.
FIG. 6 is a rear perspective view of the optical fiber connector assembly of FIGS. 4 and 5.
FIG. 7 is a rear perspective view of an optical fiber connector assembly including a flange applied onto the optical fiber and the ferrule of FIGS. 4-6.
FIG. 8 is a rear perspective view of an optical fiber connector assembly including a loose tube cable applied onto the optical fiber and the ferrule of FIGS. 4-6.
FIG. 9 is a rear perspective view of an optical fiber connector assembly including a loose tube cable and a flange applied onto the optical fiber and the ferrule of FIGS. 4-6.

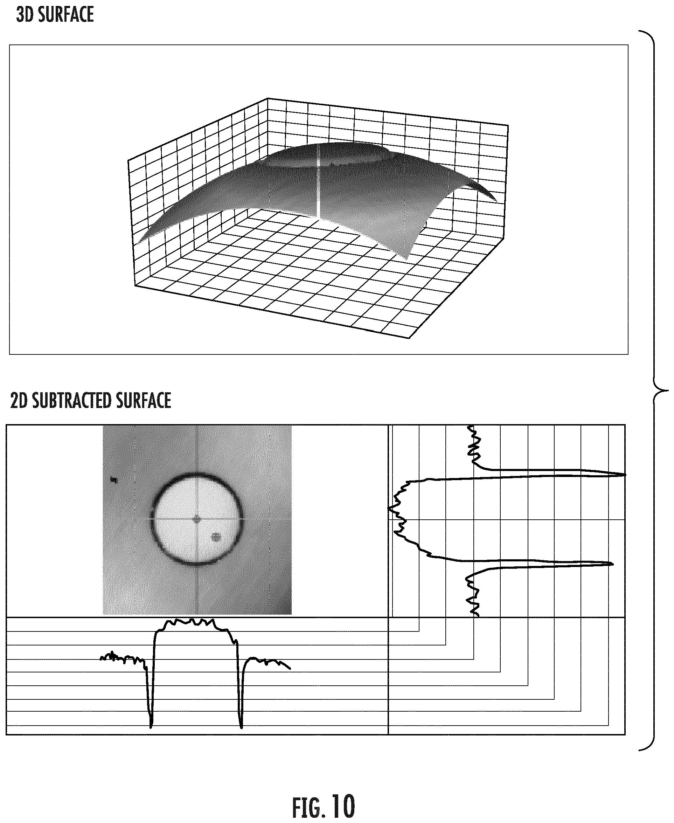

FIG. 10 relates to Example 1 and shows an end face geometry of a polished connector.
FIG. 11 relates to Example 1 and shows a microscope image of the polished end face of a thin coated optical fiber ferrule.
FIG. 12 relates to Example 1 and shows measured core to ferrule concentricity values of the optical fiber connector samples of Example 1.
FIG. 13 relates to Example 1 and shows a simulated insertion loss distribution of optical fiber connector samples of Example 1.
FIG. 14 relates to Example 2 and shows measured core to ferrule concentricity values of the optical fiber connector samples of Example 2.
FIG. 15 relates to Example 2 and shows a simulated insertion loss distribution of optical fiber connector samples of Example 2.
FIG. 16 relates to Example 2 and shows measured random mating insertion loss for six optical fiber connector samples of Example 2.

### DETAILED DESCRIPTION

The present disclosure is provided as an enabling teaching and can be understood more readily by reference to the following description, drawings, examples, and claims. To this end, those skilled in the relevant art will recognize and appreciate that many changes can be made to the various aspects of the embodiments described herein, while still obtaining the beneficial results. It will also be apparent that some of the desired benefits of the present embodiments can be obtained by selecting some of the features without utilizing other features. Accordingly, those who work in the art will recognize that many modifications and adaptations are possible and can even be desirable in certain circumstances and are a part of the present disclosure. Therefore, it is to be understood that this disclosure is not limited to the specific compositions, articles, devices, and methods disclosed unless otherwise specified. It is also to be understood that the terminology used herein is for the purposes of describing particular aspects only and is not intended to be limiting.

In this specification, and in the claims, which follow, reference will be made to a number of terms which shall be defined to have the following meanings:

"Optical fiber" refers to a waveguide having a glass portion surrounded by a coating. The glass portion includes a core and a cladding and is referred to herein as a "glass fiber".

"Concentricity" (or "concentricity error") is defined as the distance between the geometric centers of two shapes/profiles, where one of the shapes surrounds the other shape. The shapes/profiles may be defined by different elements, such as the outer surface of polymer coating 106 and the outer surface of core 102 as discussed in greater detail below. Thus, the concentricity of polymer coating 106 relative to core 102 is the distance between a geometric center of polymer coating 106 and a geometric center of core 102. Similarly, a concentricity of core 102 relative to ferrule 110 ("core-to-ferrule concentricity") is the distance between the geometric center of core 102 and a geometric center of ferrule 110.

The present disclosure relates to a thin coated optical fiber that enables connector assembly without stripping the optical fiber.

### Optical Fiber 100

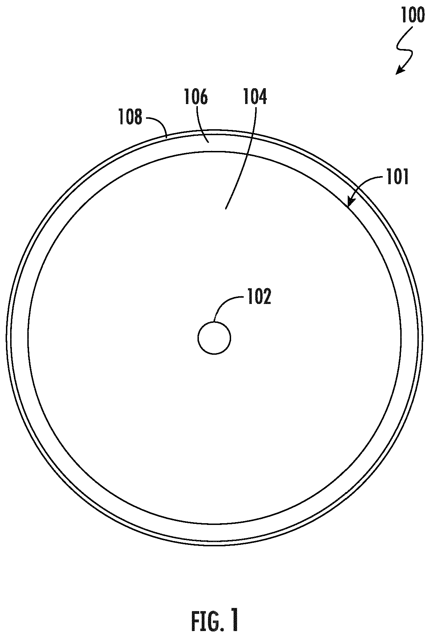

Referring first to FIG. 1, an optical fiber 100 is shown. Optical fiber 100 comprises a glass fiber 101 and a polymer coating 106. According to the second aspect of the claimed invention, optical fiber 100 includes a secondary hot melt coating 108 as discussed below.

As mentioned previously, glass fiber 101 includes a core 102 and a cladding 104, as is known in the art. Core 102 has a higher refractive index than cladding 104, and glass fiber 101 functions as a waveguide. In many applications, core 102 and cladding 104 have a discernible core-cladding boundary. Alternatively, core 102 and cladding 104 can lack a distinct boundary.

### Core 102

Core 102 comprises silica glass. The silica glass of the core region may be undoped silica glass, updoped silica glass, and/or downdoped silica glass. Updoped silica glass includes silica glass doped with an alkali metal oxide (e.g. Na₂O, K₂O, Li₂O, Cs₂O, or Rb₂O). Downdoped silica glass includes silica glass doped with F. In one embodiment, the silica glass of core 102 may be Ge-free and/or Cl-free; that is the core region comprises silica glass that lacks Ge and/or Cl.

Additionally, or alternatively, core 102 may comprise silica glass doped with at least one alkali metal, such as, lithium (Li), sodium (Na), potassium (K), rubidium (Rb), cesium (Cs) and/or francium (Fr). In some embodiments, the silica glass is doped with a combination of sodium, potassium, and rubidium. The silica glass may have a peak alkali concentration in the range from about 10 ppm to about 500, or in the range from about 20 ppm to about 450 ppm, or in the range from about 50 ppm to about 300 ppm, or in the range from about 10 ppm to about 200 ppm, or in the range from about 10 ppm to about 150 ppm. The alkali metal doping within the disclosed ranges results in lowering of Rayleigh scattering, thereby proving a lower optical fiber attenuation.

In some embodiments, core 102 comprises silica glass doped with an alkali metal and doped with F as a downdopant. The concentration of F in core 102 of optical fiber 100 is in the range from about 0.1 wt% to about 2.5 wt%, or in the range from about 0.25 wt% to about 2.25 wt%, or in the range from about 0.3 wt% to about 2.0 wt%.

In other embodiments, core 102 comprises silica glass doped with Ge and/or Cl. The concentration of GeO₂ in the core of the fiber may be in a range from about 2.0 to about 8.0 wt%, or in a range from about 3.0 to about 7.0 wt%, or in a range from about 4.0 to about 6.5 wt.%. The concentration of Cl in the core of the fiber may be in a range from 1.0 wt% to 6.0 wt%, or in a range from 1.2 wt% to 5.5 wt%, or in a range from 1.5 wt% to 5.0 wt%, or in a range from 2.0 wt% to 4.5 wt%, or greater than or equal to 1.5 wt% (e.g., ≥ 2 wt%, ≥ 2.5 wt%, ≥ 3 wt%, ≥ 3.5 wt%, ≥ 4 wt%, ≥ 4.5 wt%, ≥ 5 wt%, etc.).

The radius of core 102 is in the range from about from about 3.0 microns to about 6.5 microns, or in the range from about 3.5 microns to about 6.0 microns, or in the range from about 4.0 microns to about 6.0 microns, or in the range from about 4.5 microns to about 5.5 microns. In some embodiments, core 102 includes a portion with a constant or approximately constant relative refractive index that has a width in the radial direction of at least 1.0 micron, or at least 2.0 microns, or at least 3.0 microns, or in the range from 1.0 microns to 3.0 microns, or in the range from 2.0 microns to 3.0 microns.

### Cladding 104

Cladding 104 is composed of material(s) with an appropriate refractive index differential to provide desired optical characteristics with core 102. In embodiments in which core 102 is doped with Ge and/or Cl, cladding 104 comprises silica that is substantially free of Ge and/or Cl.

In some embodiments, the radius of cladding 104 is in the range from about 8.0 microns to about 16.0 microns, or in the range from about 9.0 microns to about 15.0 microns, or in the range from about 10.0 microns to about 14.0 microns, or in the range from about 10.5 microns to about 13.5 microns, or in the range from about 11.0 microns to about 13.0 microns. The thickness of cladding 104 is in the range from about 3.0 microns to about 10.0 microns, or from about 4.0 microns to about 9.0 microns, or from about 5.0 microns to about 8.0 microns.

### Polymer Coating 106

Referring to FIG. 1, a polymer coating 106 is applied onto glass fiber 101 such that polymer coating 106 is in contact with cladding 104 about a circumference of optical fiber 100. Polymer coating 106 has a substantially consistent thickness along a length of optical fiber 100. Stated another way, optical fiber 100 has a substantially consistent outer diameter along a length of optical fiber 100. In one embodiment, in this context, the length of optical fiber 100 is about 1.5 kilometers (km) or 2 km. According to the claimed invention, thickness of polymer coating 106 is between 0.1 µm and 10 µm, 0.1 µm and 5 µm, or 0.1 µm and 2.5 µm about the circumference of optical fiber 100. In some embodiments, the thickness of polymer coating 106 has a standard deviation ranging between 0.1 µm and 0.5 µm, 0.1 µm and 0.3 µm, or 0.1 µm and 0.2 µm.

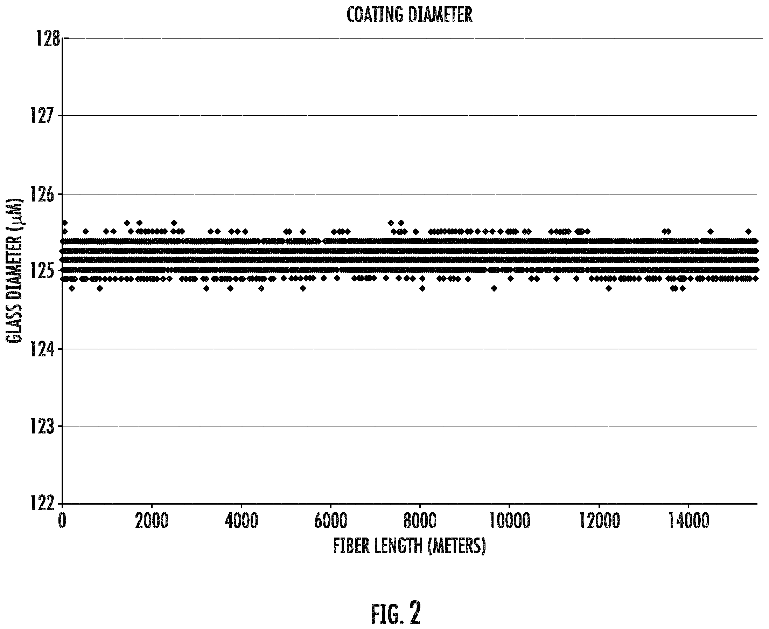

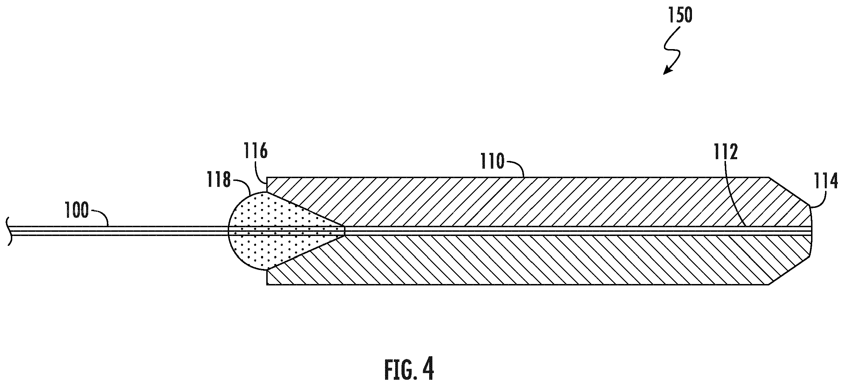

As discussed in greater detail below, the outer diameter of polymer coating 106 (substantially equivalent to outer diameter of optical fiber 100) is less than an inner diameter of a ferrule bore 112 (FIG. 4). As shown in FIG. 2, a graph of polymer coating diameter is shown along a fiber length of 1.5 km. As shown, there is minimal variation in polymer coating outer diameter; polymer coating outer diameter varies by about 0.5 µm.

Polymer coating 106 is made of various materials including UV-cured acrylates or organic UV-curing acrylate resins filled with SiO₂ or ZrO₂ nanoparticles or non-acrylate polymers such as polyimides. Polymer coating 106 may also include a silane additive to promote bonding to glass or inorganic surfaces. In some embodiments, the silane additive includes acryloxy silanes, methacrylate silanes, or Mercapto silanes, such as (3-Mercaptopropyl) trimethoxysilane and (3-acryloxypropyl)trimethoxysilane.

In some embodiments, polymer coating 106 has an elastic modulus value greater than 0.3 GPa, greater than 1 GPa, or greater than 2.5 GPa. In one embodiment, polymer coating 106 has an elastic modulus higher than 0.5 GPa or higher than 1 GPa. In another embodiment, polymer coating 106 has an elastic modulus of about 2.5 GPa. According to the claimed invention, polymer coating 106 has a hardness (Shore D) value greater than 60, greater than 70, or greater than 80. In one embodiment, polymer coating 106 has a hardness (Shore D) value of about 95. In some embodiments, polymer coating 106 has a pencil hardness value greater than 3H, greater than 4H, or greater than 5H on Polymethylmethacrylate (PMMA) film.

According to the claimed invention, the thickness of polymer coating 106 enables optical fiber 100 to be inserted into a ferrule bore 112 (FIG. 4) of a ferrule 110 without stripping optical fiber 100. In addition, the hardness of polymer coating 106 provides adequate protection to glass optical fiber 101 during processing of optical fiber 100 (e.g., insertion of optical fiber 100 into ferrule 110, etc.). A high modulus polymer coating 106 also minimizes variation in the optical fiber positioning in mated optical fiber connectors.

As mentioned previously, polymer coating 106 is applied onto glass optical fiber 101. Polymer coating 106 is applied onto glass optical fiber 101 such that a concentricity of polymer coating 106 relative to core 102 is substantially limited. According to the claimed invention, the concentricity of polymer coating 106 relative to core 102 ranges between 0.1 µm and 0.2 µm. In one embodiment, the concentricity of polymer coating 106 relative to core 102 is less than about 0.15 µm.

According to the claimed invention, when optical fiber 101 is inserted into ferrule 110 (FIG. 4) as discussed below, a core to ferrule concentricity is less than 5 µm, less than 1 µm, or less than 0.5 µm. In one embodiment, the core to ferrule concentricity is less than 0.5 µm.

As mentioned previously, as used herein, "concentricity" (or "concentricity error") is defined as the distance between the geometric centers of two shapes/profiles, where one of the shapes surrounds the other shape. The shapes/profiles may be defined by different elements, such as the outer surface of polymer coating 106 and the outer surface of core 102. Thus, the concentricity of polymer coating 106 relative to core 102 is the distance between a geometric center of polymer coating 106 and a geometric center of core 102. Similarly, a concentricity of core 102 relative to ferrule 110 ("core-to-ferrule concentricity") is the distance between the geometric center of core 102 and a geometric center of ferrule 110.

### Secondary Hot Melt Coating 108

As mentioned previously, according to the second aspect of the claimed invention, optical fiber 100 includes secondary hot melt coating 108. As shown in FIG. 1, secondary hot melt coating 108 is applied onto polymer coating 106. In some embodiments, secondary hot melt coating 108 provides protection to optical fiber 100. In embodiments not being part of the claimed invention, secondary hot melt coating 108 has a thickness of between about 5 µm and 250 µm, 5 µm and 175 µm, or 5 µm and 150 µm. In such embodiments, secondary hot melt coating 108 is removed prior to insertion of optical fiber 100 into ferrule bore 112.

According to the second aspect of the claimed invention, secondary hot melt coating 108 is applied onto polymer coating 106, and secondary hot melt coating 108 has a thickness between 0.1 µm and 10 µm, 0.1 µm and 5 µm, or 0.1 µm and 2.5 µm about the circumference of optical fiber 100. Secondary hot melt coating 108 remains on optical fiber 100 and engages with inner surface of ferrule bore 112 upon insertion of optical fiber 100 into ferrule 110.

Secondary hot melt coating 108 enables optical fiber 100 to be inserted and bonded to ferrule 110 where ferrule 110 does not include bonding agent 118. That is, during the insertion of optical fiber 100 into ferrule 110, ferrule 110 is heated to a melting temperature of secondary hot melt coating 108. In some embodiments, secondary hot melt coating 108 has a melting temperature that is lower than the melting temperature of polymer coating 106. In this way, polymer coating 106 does not degrade at the heated temperature of ferrule 110. Then, optical fiber 100 is inserted into ferrule bore 112, and the molten secondary hot melt coating 108 bonds optical fiber 100 to inner surface of ferrule bore 112.

In some embodiments, secondary hot melt coating 108 is doped with titanium oxide to provide enhanced fatigue characteristics (e.g., resistance) to optical fiber 100.

### Optical Fiber Connector Assembly 150

Referring now to FIG. 4, an optical fiber connector assembly 150 is shown. Optical fiber connector assembly 150 includes a ferrule 110 and optical fiber 100 inserted into ferrule 110. Ferrule 110 may be the same as that described in U.S. Pat. No. 8,702,322 ("the '322 patent"), which describes many details related to the geometry of the ferrule, the location of a bonding agent within a bore of the ferrule, and possible compositions for the bonding agent. In general, ferrule 110 includes a ferrule bore 112 extending between front and rear ends 114, 116 along a longitudinal axis A1. As shown in FIG. 4, ferrule bore 112 has a substantially consistent size from front end 114 to rear end 116. However, in some embodiments, ferrule bore 112 has a first section or counter-bore section extending inwardly from rear end 114 of the ferrule 110, a second section or ferrule microhole (also referred to as "micro-hole" or "micro-hole section") extending inwardly from the front end 114 of ferrule 110, and a transition section located between the counter-bore section and the ferrule microhole. The counter-bore section, ferrule microhole, and transition section have respective lengths measured along or parallel to the longitudinal axis A1. The front and rear ends 114, 116 define respective front and rear end faces of the ferrule 110 that generally extend in planes parallel or substantially parallel to each other but substantially perpendicular to the longitudinal axis A1. In some embodiments, front end face 114 may be at a slight angle relative to the longitudinal axis A1 to provide, for example, an angled physical contact (APC) end face.

In some embodiments, ferrule 110 is made of zirconia or like materials. In some embodiments, ferrule 110 has a coefficient of thermal expansion of about 10⁻⁵/°C.

In some embodiments, as shown in FIG. 4, a bonding agent 118 may be pre-loaded or stored within ferrule 110 (e.g., bonding agent 118 may be pre-loaded into the ferrule bore 112 by the manufacturer of ferrule 110) for a significant amount of time (e.g., at least an hour, a day, a year, etc.) before inserting optical fiber 100 (FIG. 1) into ferrule bore 112. As shown, bonding agent 118 is located partially within ferrule 110 with a portion of bonding agent 118 extending outwardly beyond rear end face 116. External portion of bonding agent 118 provides additional stability and strain relief for optical fiber 100 when inserted into ferrule bore 112 as discussed below. In some embodiments, bonding agent 118 is not included in ferrule bore 112 as discussed below.

The '322 patent describes how the bonding agent 42 may be a free-flowing powder material coupled within a transition section of ferrule bore 34 via compression. The '322 patent also mentions that bonding agent 42 may alternatively be extruded.

Additional details relating to such bonding agents can be found in U.S. Pat. No. 8,696,215 ("the '215 patent") and U.S. Patent No. 9,568,686 ("the '686 patent").

Bonding agent 118 is configured to be heated and cooled relatively quickly to facilitate the termination process of a fiber optic cable, yet are also configured to provide sufficient coupling between the optical fiber(s) of a fiber optical cable and the ferrule bore 112. One specific example of bonding agent 118 is one that comprises a partially cross-linked polymer resin and a coupling agent that provides chemical coupling between the polymer resin and optical fiber(s) 100, ferrule 110, or both. The presence of the coupling agent allows the polymer resin to be selected primarily for heating and cooling properties rather than adhesion properties. Bonding agent 118 may even comprise a majority of the polymer resin so as to be largely characterized by the heating and cooling properties of the polymer resin. For example, bonding agent 118 may comprise between about 0.1 to about 10 parts by weight of the coupling agent per 100 parts by weight of the partially cross-linked polymer resin.

As used herein, "cross-linked" or "cross-linking" refers to the chemical bonding that connects a polymer chain to an adjacent polymer chain; "partially cross-linked" is where not all adjacent chains are bonded; and "partially cross-linkable" describes a chemical species that becomes partially cross-linked when sufficient heat is applied. It should be understood that the terms "partially cross-linked" and "partially cross-linkable" describe the same polymer resin before or after partially cross-linking. For example, a polymer resin may be described as partially cross-linkable when it is loaded into a ferrule and has not yet been heated to a temperature that results in the polymer resin partially or completely cross-linking.

One example of a partially cross-linkable polymer resin with desirable heating and cooling characteristics is polyphenylene sulfide. One example of a coupling agent having desirable adhesion characteristics is a coupling agent having a silane functional group, such as one or more of the following: an alkoxysilane, an oxime silane, an acetoxy silane, a zirconate, a titanate, a silane with an epoxy ring on one end and trimethoxy functional group at the other end, or combinations thereof. Other examples of partially cross-linkable polymers, coupling agents, and bonding agents are described in the '322 patent, '215 patent, and '686 patent.

The partially cross-linkable polymer resin of the bonding agent 118 has a melting temperature less than the cross-linking temperature. For example, the partially cross-linkable polymer resins above may each have a melting point at temperatures of less than 250°C, 270°C, or 290°C, yet each have a cross-linking temperature (i.e., the temperature at which the resin materials cross-link in the presence of air) of at least 300°C, 325°C, or even 350°C.

In one embodiment, a cross-linked polymer resin may have a melting point temperature of at least 250°C or at least 300°C.

As mentioned above, the bonding agent 118 may be a free-flowing powder material at some point. The powder may bay a result of grinding various components of the bonding agent 118 (e.g., the partially cross-linkable resin) that are initially solid in to respective powders, and then mixing powders thoroughly together. Some components of the bonding agent 118 (e.g., the coupling agent) may be a liquid, but the fraction such components in the blend may be relatively small (e.g., less than 10 parts by weight of the overall blend) so that the resulting blend is still considered a free-flowing powder. For example, in one embodiment, the coupling agent may be pre-reacted with the thermoplastic powders in an organic solvent under refluxing conditions. After removal of the solvent, the treated powder remains. Under the conditions of refluxing solvent, some of the coupling agent may have become permanently bonded to the polymer.

In some embodiments, bonding agent 118 has a composition comprising a partially cross-linked resin that is a polymer and a coupling agent that chemically bonds the partially cross-linked resin to an inorganic surface of at least one of the optical fiber and the ferrule.

In some embodiments, bonding agent 118 has a viscosity that is less than 700 Pa.sec, less than 500 Pa.sec, or less than 300 Pa.sec at a heating temperature described herein.

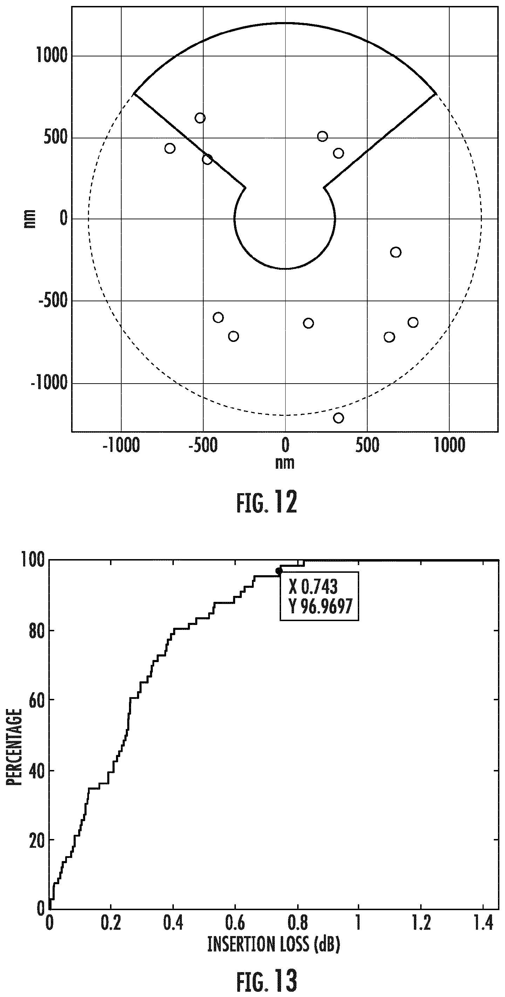

As mentioned previously, optical fiber connector assembly 150 includes an optical fiber 100 inserted into ferrule 110. Referring to FIGS. 4-6, optical fiber 100 is inserted into ferrule 110 that includes bonding agent 118. As shown in FIG. 13, bonding agent 118 is positioned between and contacts polymer coating 106 of optical fiber 100 and an inner surface of ferrule bore 112. Optical fiber 100, which extends throughout optical fiber cable assembly 150 may further be enclosed by a loose tube protection (not shown) or a second protector layer (not shown) that is applied after the termination process.

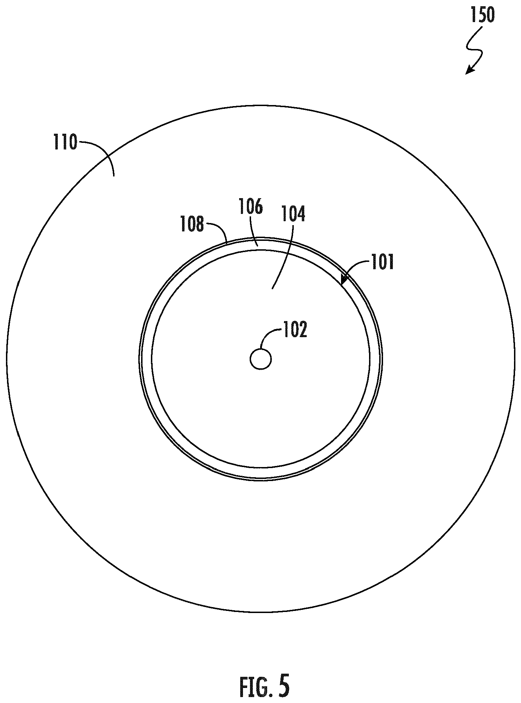

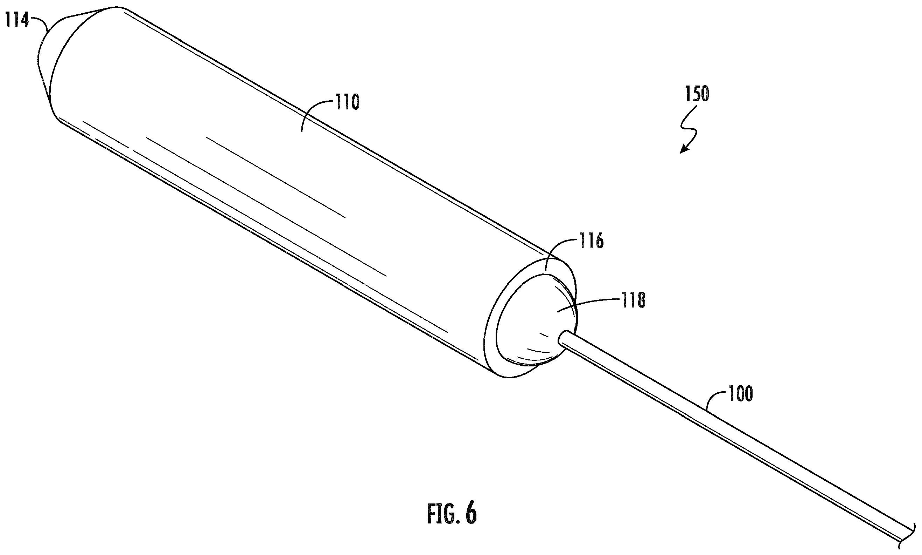

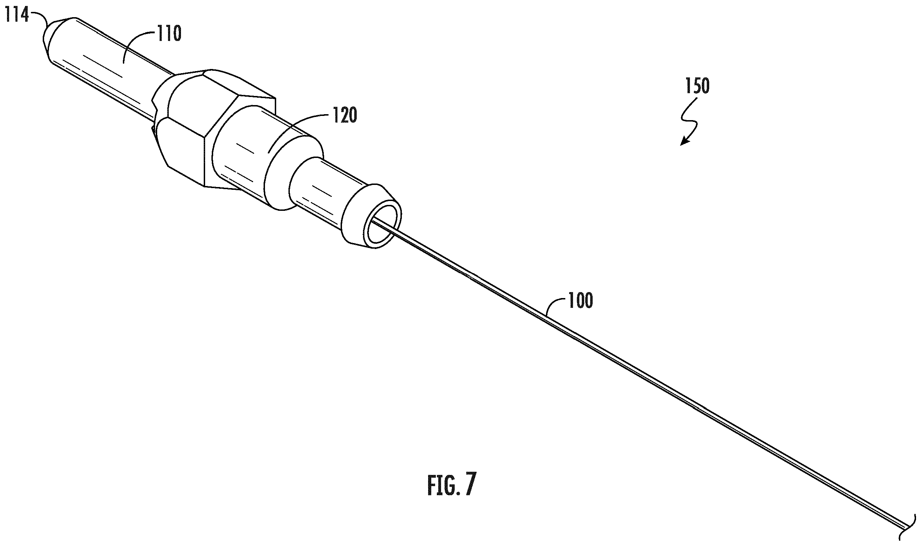

FIG. 6 shows a rear perspective view of optical fiber 150 shown in FIGS. 4 and 5. As mentioned previously, bonding agent 118 is located partially within ferrule 110 with a prior of bonding agent 118 extending outwardly beyond rear end face 116. External portion of bonding agent 118 provides additional stability and strain relief for optical fiber 100 when inserted into ferrule bore 112. In some embodiments, ferrule 110 is pre-assembled with a flange 120, as shown in FIG. 7, that is integrated into a connector housing (not shown). Bonding agent 118 is dispensed into rear end 116 and ferrule bore 112 of ferrule 110 through connector housing (not shown) and ferrule holder (not shown). As discussed in greater detail below, optical fiber 100 is directly inserted into ferrule bore without stripping.

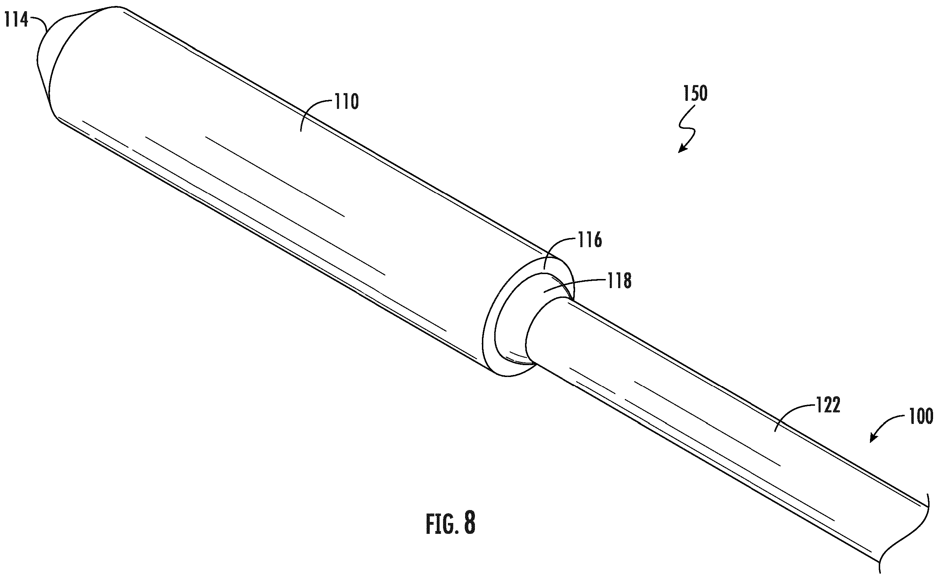

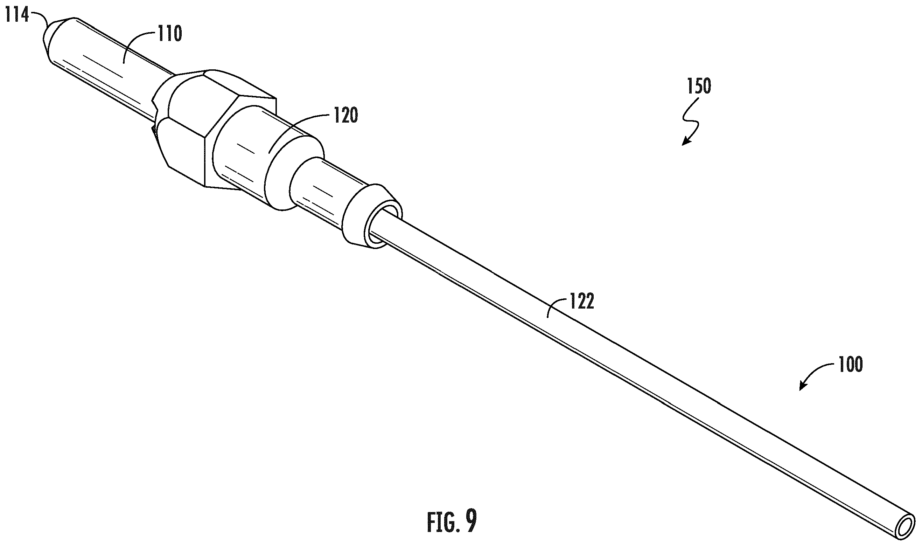

In another embodiment, as shown in FIG. 8, optical fiber 100 has been inserted into ferrule 110, and optical fiber 100 is protected by a loose cable 122. Loose tube cable 122 is configured to allow easy handing of fiber by acting as a strength member to provide additional stability and protection to optical fiber 100. In some embodiments, loose tube cable 122 includes strength members such as Kevlar fibers. In some embodiments, loose cable 122 has an outer diameter ranging between 0.5 mm and 3.0 mm, 0.5 mm and 2.0 mm, or 0.5 mm and 1.5 mm. The edge of loose cable 122 is bonded to rear end face 116 of ferrule bore 112 as shown. Referring now to FIG. 9, optical fiber 100 is within loose tube cable 122 that is bonded to ferrule 100 with flange 120.

In another embodiment, loose tube cable 122 is crimped to a connector housing (not shown).

### Properties of Optical Fiber Connector Assembly 150

In some embodiments, optical fiber connector assembly has an insertion loss ranging between 0.1 dB and 1.5 dB, 0.1 dB and 1.0 dB, or 0.1 dB and 0.75 dB at a reference wavelength of 1310 nm or 1550 nm. In some embodiments, the insertion loss of optical fiber connector assembly 150 corresponds with insertion losses associated with Grade B and Grade C connectors as established by The International Electrotechnical Commission (IEC). Also, as mentioned previously, when optical fiber 101 is inserted into ferrule 110 (FIG. 4) to form optical fiber connector assembly 150, a core to ferrule concentricity is less than 5 µm, less than 1 µm, or less than 0.5 µm. In one embodiment, the core to ferrule concentricity is less than 0.5 µm.

### Method of Assembling Optical Fiber Connector Assembly 150

To assemble optical fiber connector assembly 150 with an optical fiber 100 (FIG. 1), heat is applied to ferrule 110 to bring ferrule 110 to a heated state. Heat from a heating source (not shown, e.g., a heating port) is applied onto an outer surface 111 of ferrule 110 at a heating temperature such that bonding agent 118 (that is present within ferrule bore 112) melts and ferrule 110 expands. In some embodiments, the heating temperature at which heat is applied onto outer surface 111 is greater than 250°C, greater than 300°C, greater than 350°C, or greater than 400°C. As mentioned previously, when heat is applied onto outer surface 111, ferrule 110 expands. Specifically, ferrule bore 112 (e.g., including ferrules with a counter-bore section and/or ferrule microhole) expand. In addition, when heated, the diameter of ferrule bore 112 (e.g., including ferrules with a counter-bore section and/or ferrule microhole) are greater than the outer diameter of optical fiber 100 to facilitate insertion of optical fiber 100 within ferrule 110 as discussed below. In comparison to the coefficient of thermal expansion (CTE) of ferrule 110, the CTE of optical fiber 100 (e.g., glass, silica glass, etc.) is small and therefore, the diameter change of optical fiber 110 when heat is applied (to ferrule 110) is small compared to the diameter change of ferrule 110 (e.g., including a ferrule microhole and counter-bore section). In some embodiments, ferrule 110 includes a counter-bore section and a ferrule microhole, and when heat is applied the respective diameters of the counter-bore section and the ferrule microhole increase to accommodate insertion of optical fiber 100.

Once ferrule 110 is in the heated state, optical fiber 100 is inserted into ferrule 110 through rear end 116 and through melted bonding agent 118 such that at least a portion of optical fiber 100 protrudes outwardly from front end 114 of ferrule 110. In embodiments where ferrule 110 includes a counter bore section and a ferrule microhole, optical fiber 100 is inserted through a counter-bore section, through melted bonding agent 118, through a transition section between the counter bore section and the ferrule microhole, and through expanded ferrule microhole such that at least a portion of optical fiber 100 protrudes outwardly from front end 114 of ferrule 110 and at least a portion of bonding agent 118 is within the ferrule microhole.

After optical fiber 100 is inserted into ferrule 110, heat is no longer applied onto ferrule 110 such that ferrule 110 transitions to a cooled state. In the cooled state, ferrule bore 112 of ferrule 110 contracts to substantially its original configuration prior to heating. In embodiments where ferrule 110 includes a counter bore section and a ferrule microhole, in the cooled state, counter-bore section and ferrule microhole contract to substantially the configuration prior to heating. The contraction of ferrule bore 112 of ferrule 110 results in an interference fit between the previously inserted optical fiber 100 and ferrule bore 112 with bonding agent 118 between optical fiber 100 and an inner wall of ferrule bore 112. In embodiments where ferrule 110 includes a counter bore section and a ferrule microhole, the contraction of the ferrule microhole results in an interference fit between the previously inserted optical fiber 100 and the ferrule microhole with bonding agent 118 between optical fiber 100 and an inner wall of the ferrule microhole. In some embodiments, the interference fit ranges between about 0 microns and -0.5 microns, between about 0 microns and -0.4 microns, or between about 0 microns and -0.3 microns, where the interference fit is determined by subtracting the outer diameter of the optical fiber 100 from the diameter of ferrule bore 112 such that values of zero or less (negative values) are associated with interference fits and values above zero are associated with clearance fits as previously discussed.

Advantageously, reducing the diameter of the ferrule bore or the ferrule microhole (to form an interference fit configuration with optical fiber 100) assists with positioning of optical fiber 100 in ferrule bore 112 or the ferrule microhole by keeping optical fiber 100 more centered within ferrule 110 thereby, reducing the insertion loss when connecting optical fibers 100 to one another.

As mentioned previously, in some embodiments, ferrule 110 does not include bonding agent 118 within ferrule bore 112. In such embodiments, to assemble optical fiber connector assembly 150, heat is applied to an optical fiber 100 that includes secondary hot melt coating 108. That is, during the insertion of optical fiber 100 into ferrule 110, ferrule 110 is heated to a melting temperature of secondary hot melt coating 108. As mentioned previously, in some embodiments, secondary hot melt coating 108 has a melting temperature that is lower than the melting temperature of polymer coating 106. In this way, polymer coating 106 does not degrade at the heated temperature of ferrule 110. Then, optical fiber 100 is inserted into ferrule bore 112, and the molten secondary hot melt coating 108 bonds optical fiber 100 to inner surface of ferrule bore 112.

### Example 1

An optical fiber with a cladding diameter of 115 µm and a coating diameter of 124.5 µm was fabricated. The coating material was made of a clear UV-curable acrylate hard coat with the addition of 1 wt.% (3-mercaptopropyl) trimethoxysilane. The coating has a glass transition temperature (DMA) of 115°C. The coating material has modulus of 1.5GPa, hardness (Shore D) of 95, and pencil hardness of 6H to 8H on PMMA film. Because of the high modulus and hardness of the coating, the geometric dimensions of the coating are unaffected by the handling process.

The optical fiber was placed inside a 0.7 mm diameter outer diameter loose tube, with the fiber extending about 15 mm from either end of the loose tube jacket. Without stripping, the thin coated fiber was directly inserted into the ferrule inside a LC connector housing which was prefilled with adhesive for connector bonding. The fiber insertion was stopped when the edge of the loose tube jacket reached the end of the ferrule. After the adhesive was cured, the excess length of optical fiber protruding beyond the connector end was removed - leaving a very short fiber stub similar to standard connector termination process. The polishing process is modified from conventional process with increased polishing time prior to the final polishing step to remove any lingering shreds of coating which may affect physical contact between the connectors during mating. In the finished ferrule end face the coating ring is slightly recessed below the fiber and ferrule surface.

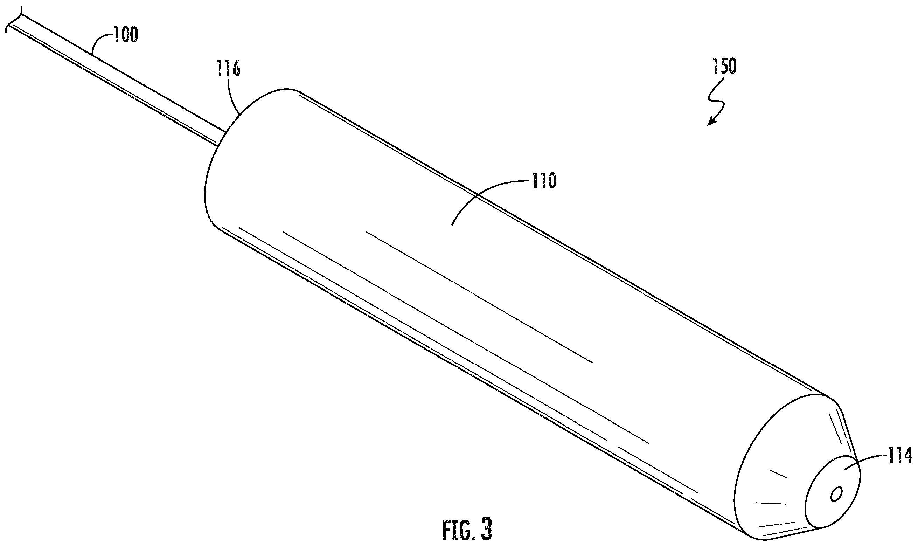

The measured endface geometry of a typical LC connector is depicted in FIG. 3. As shown, the fiber height relative to the ferrule surface is consistently in the range of between 10 nm to 50 nm. The thin coating ring is slightly recessed. The radius of curvature and apex offset also meets the specifications of standard physical contact connectors.

The insertion loss (e.g., return loss) of the assembled connector was about -55 dB. This is comparable to standard LC connectors known in the art.

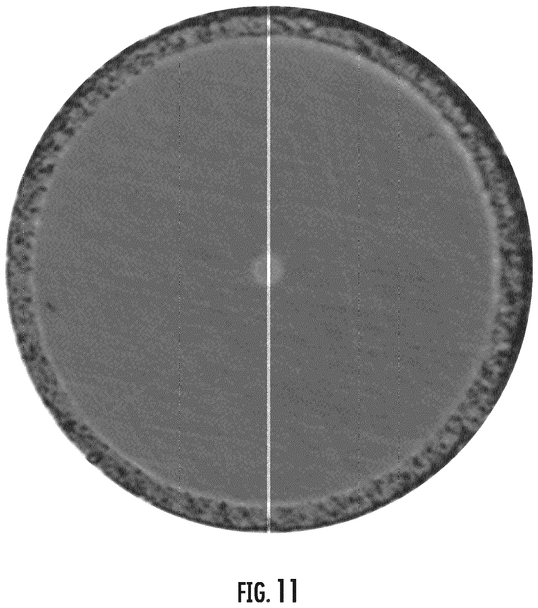

The core to ferrule eccentricities of 12 assembled LC connectors with the optical fiber of this Example (i.e., with the polymer coating applied) were measured and the results are shown in FIG. 12. As shown, the maximum core to ferrule concentricity of the assembled connectors was less than 1.2 µm - suggesting that the thin coating has good uniformity. Without wishing to be held to any particular theory, one source contributing to the core to ferrule concentricity is the size of the optical fiber. As shown in FIG. 11, an epoxy crescent is visible, which indicates that the fiber is biased to one side of the ferrule bore when inserted and may explain the lack of connector samples having an concentricity lower than 500 nm.

Referring now to FIG. 13, insertion loss between assembled connectors was simulated based on measured core to ferrule eccentricities. As shown in the insertion loss distribution model, the maximum insertion loss for 97 percent of the assembled connector population is about 0.74 dB at a reference wavelength of 1310 nm.

### Example 2

In Example 1, there was a relatively large difference between the inner diameter of the ferrule and the outer diameter of the coated optical fiber. In this Example, the difference between the inner diameter of the ferrule and the outer diameter of the coated optical fiber was limited. The outer diameter of the coated optical fiber was controlled to 125.22 µm, and a new set of LC connector ferrules with inner diameters of 125.5 µm were used.

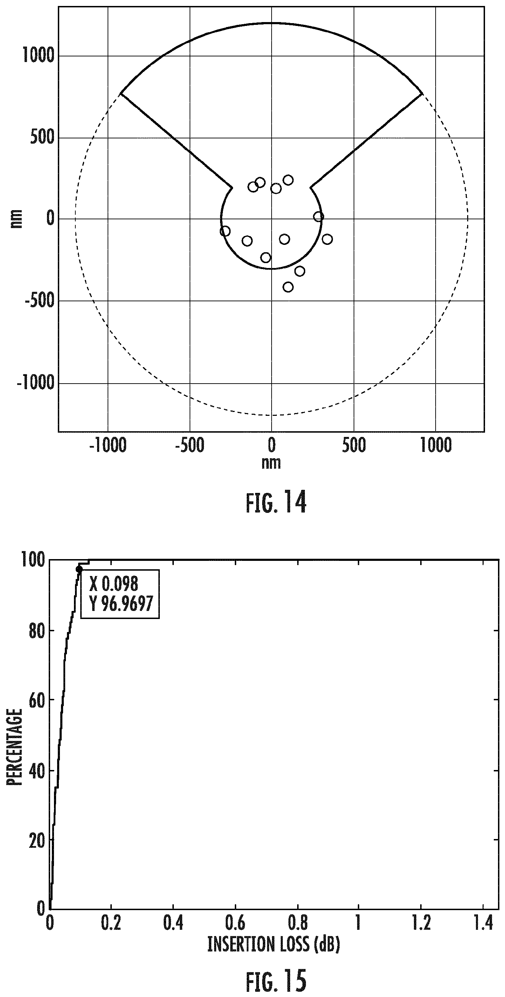

Referring to FIG. 14, the core to ferrule concentricity distribution of the assembled connectors is shown. As can be seen, the core to ferrule eccentricities are generally localized and have relatively low values. In addition, the simulated insertion loss distribution of the assembled connector samples, as shown in FIG. 15, indicates that 97% of the assembled connector population had a maximum insertion loss of about 0.10 dB.

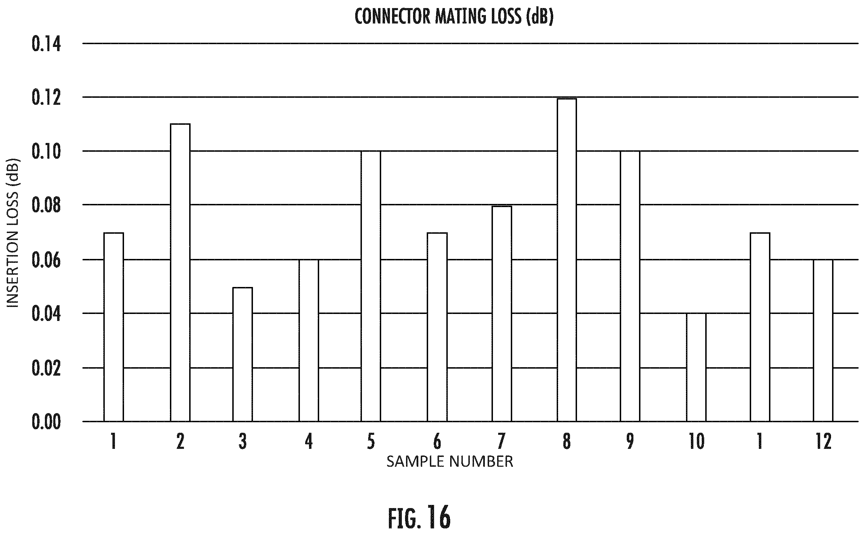

The simulated insertion loss distribution was confirmed by the measurement of 12 random connections between assembled connectors as shown in FIG. 16. As shown, most of the samples yielded an insertion loss of less than 0.10 dB at a reference wavelength of 1310 nm.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It will be apparent to those skilled in the art that various modifications and variations can be made without departing from the scope of the invention. Since modifications combinations, sub-combinations and variations of the disclosed embodiments incorporating the substance of the invention may occur to persons skilled in the art, the invention should be construed to include everything within the scope of the appended claims.

## Claims

1. An optical fiber connector assembly (150) comprising:
a coated optical fiber (100) comprising:
a glass optical fiber (101) comprising a fiber core (102) and a cladding (104) surrounding the fiber core (102);
a polymer coating (106) surrounding the glass optical fiber (101);
wherein the polymer coating (106) has a thickness between 0.1 µm and 10 µm and a hardness, Shore D, greater than 60; and
a ferrule having a front end, a rear end, and a ferrule bore extending between the front end and the rear end, wherein the coated optical fiber is positioned within the ferrule bore such that a core-to-ferrule concentricity at the front end of the ferrule is less than 5 µm,
**characterized in that**
the polymer coating (106) has a concentricity relative to the fiber core (102) ranging between 0.1 µm and 0.2 µm.

2. The optical fiber connector assembly of claim 1, wherein the concentricity of the polymer coating (106) relative to the fiber core (102) is less than about 0.15 µm.

3. The optical fiber connector assembly of either claim 1 or 2, wherein the polymer coating further comprises a secondary hot melt coating (108), wherein the secondary hot melt coating has a thickness ranging between 0.1 µm and 10 µm.

4. The optical fiber connector assembly of any of claims 1 to 3, wherein the assembly has an insertion loss ranging between 0.1 dB and 1.5 dB at a reference wavelength of 1310 nm or 1550 nm.

5. The optical fiber connector assembly of any of claims 1-4, wherein the polymer coating is selected from the group consisting of: UV-cured acrylates, organic UV-curing acrylate resins filled with SiO₂ or ZrO₂ nanoparticles, non-acrylate polymers such as polyimides, and silane additives.

6. The optical fiber connector assembly of any of claims 1-5, wherein the polymer coating has an elastic modulus greater than 0.3 GPa.

7. The optical fiber connector assembly of any of claims 1-6, wherein the polymer coating has a pencil hardness value greater than 3H on Polymethylmethacrylate, PMMA, film.

8. A method of preparing an optical fiber connector assembly that includes a coated optical fiber (100) and a ferrule (110), the coated optical fiber comprising a glass optical fiber and a polymer coating (106) surrounding the glass optical fiber (101), the glass optical fiber (101) including a core (102) and a cladding (104) surrounding the core (102), wherein the polymer coating (106) has a thickness between 0.1 µm and 10 µm, a hardness, Shore D, greater than 60, ferrule (110) having a front end (114), a rear end (116), and a ferrule bore (112) extending between the front end (114) and the rear end (116), the method comprising:
inserting the coated optical fiber (100) into the ferrule (110);
wherein the polymer coating (106) of the coated optical fiber (100) engages with an inner surface of the ferrule bore (112) by a secondary hot melt coating (108) applied onto the polymer coating (106), wherein the secondary hot melt coating has a thickness between 0.1 µm and 10 µm about the circumference of the coated optical fiber, or a bonding agent (118) positioned within the ferrule bore (112) such that after insertion of the optical fiber, the bonding agent is in contact with an external surface of the polymer coating and the inner surface of the ferrule bore (112); and
wherein the coated optical fiber (100) is positioned within the ferrule bore (112) following the inserting step such that a core to ferrule concentricity of the connector assembly at the front end (114) of the ferrule (110) is less than 5 µm, **characterized in that** the polymer coating (106) has a concentricity relative to the core (102) ranging between 0.1 µm and 0.2 µm.

9. The method of claim 8, wherein the polymer coating is selected from the group consisting of: UV-cured acrylates, organic UV-curing acrylate resins filled with SiO₂ or ZrO₂ nanoparticles, non-acrylate polymers such as polyimides, and silane additives.

## Patentansprüche

1. Lichtwellenleiter-Verbinderanordnung (150), die Folgendes beinhaltet:
einen beschichteten Lichtwellenleiter (100):
einen Glas-Lichtwellenleiter (101), der einen Faserkern (102) und einen den Faserkern (102) umgebenden Mantel (104) beinhaltet;
eine den Glas-Lichtwellenleiter (101) umgebende Polymerbeschichtung (106);
wobei die Polymerbeschichtung (106) eine Dicke zwischen 0,1 µm und 10 µm und eine Härte, Shore D, von mehr als 60 aufweist; und
eine Ferrule, die ein vorderes Ende, ein hinteres Ende und eine Ferrulenbohrung, die sich zwischen dem vorderen Ende und dem hinteren Ende erstreckt, aufweist, wobei der beschichtete Lichtwellenleiter in der Ferrulenbohrung positioniert ist, so dass eine Konzentrizität von Kern zu Ferrule am vorderen Ende der Ferrule kleiner als 5 µm ist, **dadurch gekennzeichnet, dass** die Polymerbeschichtung (106) eine Konzentrizität relativ zum Faserkern (102) im Bereich zwischen 0,1 µm und 0,2 µm aufweist.

2. Lichtwellenleiter-Verbinderanordnung nach Anspruch 1, wobei die Konzentrizität der Polymerbeschichtung (106) relativ zum Faserkern (102) weniger als etwa 0,15 µm beträgt.

3. Lichtwellenleiter-Verbinderanordnung nach Anspruch 1 oder 2, wobei die Polymerbeschichtung ferner eine sekundäre Heißschmelzbeschichtung (108) beinhaltet, wobei die sekundäre Heißschmelzbeschichtung eine Dicke im Bereich zwischen 0,1 µm und 10 µm aufweist.

4. Lichtwellenleiter-Verbinderanordnung nach einem der Ansprüche 1 bis 3, wobei die Anordnung eine Einfügedämpfung zwischen 0,1 dB und 1,5 dB bei einer Referenzwellenlänge von 1310 nm oder 1550 nm hat.

5. Lichtwellenleiter-Verbinderanordnung nach einem der Ansprüche 1 bis 4, wobei die Polymerbeschichtung ausgewählt ist aus der Gruppe bestehend aus: UV-gehärteten Acrylaten, organischen UV-härtenden Acrylatharzen, gefüllt mit SiO₂- oder ZrO₂-Nanopartikeln, Nicht-Acrylat-Polymeren wie Polyimiden und Silanadditiven.

6. Lichtwellenleiter-Verbinderanordnung nach einem der Ansprüche 1 bis 5, wobei die Polymerbeschichtung einen Elastizitätsmodul von mehr als 0,3 GPa hat.

7. Lichtwellenleiter-Verbinderanordnung nach einem der Ansprüche 1 bis 6, wobei die Polymerbeschichtung einen Bleistifthärtewert von mehr als 3H auf Polymethylmethacrylat-, PMMA, -Folie hat.

8. Verfahren zur Herstellung einer Lichtwellenleiter-Verbinderanordnung, die einen beschichteten Lichtwellenleiter (100) und eine Ferrule (110) beinhaltet, wobei der beschichtete Lichtwellenleiter einen Glas-Lichtwellenleiter und eine den Glas-Lichtwellenleiter (101) umgebende Polymerbeschichtung (106) beinhaltet, wobei der Glas-Lichtwellenleiter (101) einen Kern (102) und einen den Kern (102) umgebenden Mantel (104) umfasst, wobei die Polymerbeschichtung (106) eine Dicke zwischen 0,1 µm und 10 µm, eine Härte, Shore D, von mehr als 60 aufweist, die Ferrule (110) ein vorderes Ende (114), ein hinteres Ende (116) und eine Ferrulenbohrung (112), die sich zwischen dem vorderen Ende (114) und dem hinteren Ende (116) erstreckt, aufweist, wobei das Verfahren Folgendes umfasst:
Einfügen des beschichteten Lichtwellenleiters (100) in die Ferrule (110);
wobei die Polymerbeschichtung (106) des beschichteten Lichtwellenleiters (100) durch eine sekundäre Heißschmelzbeschichtung (108), die auf die Polymerbeschichtung (106) aufgetragen wird, wobei die sekundäre Heißschmelzbeschichtung eine Dicke zwischen 0,1 µm und 10 µm um den Umfang des beschichteten Lichtwellenleiters aufweist, oder ein Bindemittel (118), das in der Ferrulenbohrung (112) positioniert wird, mit einer Innenfläche der Ferrulenbohrung (112) in Eingriff kommt, so dass das Bindemittel nach dem Einfügen des Lichtwellenleiters mit einer Außenfläche der Polymerbeschichtung und der Innenfläche der Ferrulenbohrung (112) in Kontakt ist; und
wobei der beschichtete Lichtwellenleiter (100) nach dem Einfügungsschritt in der Ferrulenbohrung (112) positioniert ist, so dass eine Konzentrizität von Kern zu Ferrule der Verbinderanordnung am vorderen Ende (114) der Ferrule (110) kleiner als 5 µm ist, **dadurch gekennzeichnet, dass** die Polymerbeschichtung (106) eine Konzentrizität relativ zum Kern (102) im Bereich zwischen 0,1 µm und 0,2 µm aufweist.

9. Verfahren nach Anspruch 8, wobei die Polymerbeschichtung ausgewählt wird aus der Gruppe bestehend aus: UV-gehärteten Acrylaten, organischen UV-härtenden Acrylatharzen, gefüllt mit SiO₂- oder ZrO₂-Nanopartikeln, Nicht-Acrylat-Polymeren wie Polyimiden und Silanadditiven.

## Revendications

1. Ensemble connecteur de fibre optique (150) comprenant :
une fibre optique revêtue (100) comprenant :
une fibre optique en verre (101) comprenant un cœur de fibre (102) et un gainage (104) entourant le cœur de fibre (102) ;
un revêtement polymère (106) entourant la fibre optique en verre (101) ;
dans lequel le revêtement polymère (106) a une épaisseur d'entre 0,1 µm et 10 µm et une dureté Shore D, supérieure à 60 ; et
un ferrule ayant une extrémité avant, une extrémité arrière et un alésage de ferrule s'étendant entre l'extrémité avant et l'extrémité arrière, dans lequel la fibre optique revêtue est positionnée dans l'alésage de ferrule de sorte qu'une concentricité de cœur à ferrule à l'extrémité avant du ferrule est inférieure à 5 µm, **caractérisé en ce que** le revêtement polymère (106) a une concentricité par rapport au cœur de fibre (102) allant de 0,1 µm à 0,2 µm.

2. Ensemble connecteur de fibre optique selon la revendication 1, dans lequel la concentricité du revêtement polymère (106) par rapport au cœur de fibre (102) est inférieure à environ 0,15 µm.

3. Ensemble connecteur de fibre optique selon la revendication 1 ou 2, dans lequel le revêtement polymère comprend en outre un revêtement thermofusible secondaire (108), dans lequel le revêtement thermofusible secondaire a une épaisseur allant de 0,1 µm à 10 µm.

4. Ensemble connecteur de fibre optique selon l'une quelconque des revendications 1 à 3, dans lequel l'ensemble a une région d'insertion allant de 0,1 dB à 1,5 dB à une longueur d'onde de référence de 1310 nm ou de 1550 nm.

5. Ensemble connecteur de fibre optique selon l'une quelconque des revendications 1 à 4, dans lequel le revêtement polymère est sélectionné parmi le groupe composé de : acrylates durcis aux UV, résines acrylates organiques durcissables aux UV remplies de nanoparticules SiO₂ ou ZrO₂, polymères non acrylates tels que polyimides, et additifs de silane.

6. Ensemble connecteur de fibre optique selon l'une quelconque des revendications 1 à 5, dans lequel le revêtement polymère a un module élastique supérieur à 0,3 GPa.

7. Ensemble connecteur de fibre optique selon l'une quelconque des revendications 1 à 6, dans lequel le revêtement polymère a une valeur de dureté de crayon supérieure à 3H sur un film de polyméthylméthacrylate, PMMA.

8. Procédé de préparation d'un ensemble connecteur de fibre optique qui comprend une fibre optique revêtue (100) et un ferrule (110), la fibre optique revêtue comprenant une fibre optique en verre et un revêtement polymère (106) entourant la fibre optique en verre (101), la fibre optique en verre (101) comprenant un cœur (102) et un gainage (104) entourant le cœur (102), dans lequel le revêtement polymère (106) a une épaisseur d'entre 0,1 µm et 10 µm, une dureté Shore D supérieure à 60, le ferrule (110) ayant une extrémité avant (114), une extrémité arrière (116) et un alésage de ferrule (112) s'étendant entre l'extrémité avant (114) et l'extrémité arrière (116), le procédé comprenant :
insérer la fibre optique en verre (100) dans le ferrule (110) ;
dans lequel le revêtement polymère (106) de la fibre optique revêtue (100) s'engage avec une surface intérieure de l'alésage de ferrule (112) par un revêtement thermofusible secondaire (108) appliqué sur le revêtement polymère (106), dans lequel le revêtement thermofusible secondaire a une épaisseur allant de 0,1 µm à 10 µm autour de la circonférence de la fibre optique revêtue,
ou un agent de liaison (118) positionné dans l'alésage de ferrule (112) de sorte qu'après l'insertion de la fibre optique, l'agent de liaison est en contact avec une surface extérieure du revêtement polymère et la surface intérieure de l'alésage de ferrule (112) ; et
dans lequel la fibre optique revêtue (100) est positionnée dans l'alésage de ferrule (112) suite à l'étape d'insertion de sorte qu'une concentricité de cœur à ferrule de l'ensemble connecteur à l'extrémité avant (114) du ferrule (110) est inférieure à 5 µm, **caractérisé en ce que** le revêtement polymère (106) a une concentricité par rapport au cœur (102) allant de 0,1 µm à 0,2 µm.

9. Procédé selon la revendication 8, dans lequel le revêtement polymère est sélectionné parmi le groupe composé de : acrylates durcis aux UV, résines acrylates organiques durcissables aux UV remplies de nanoparticules SiO₂ ou ZrO₂, polymères non acrylates tels que polyimides, et additifs de silane.
